# EUROPEAN PATENT SPECIFICATION

(11) **EP 0 948 465 B1**
(45) Date of publication and mention of the grant of the patent: **05.12.2001**
(21) Application number: 96930351.0
(22) Date of filing: 02.09.1996
(51) Int. Cl.: C03B 9/16, C03B 9/193, C03B 9/41, C03B 9/447

(54) **GLASSWARE FORMING MACHINE OF THE INDIVIDUAL SECTION (IS) TYPE**
INDIVIDUAL SECTION (IS) MASCHINE ZUM HERSTELLEN VON GLASWAREN
MACHINE DE FA ONNAGE D'ARTICLES EN VERRE DE TYPE A SECTION INDIVIDUELLE (SI)

(43) Date of publication of application: 13.10.1999
(73) Proprietor: BDF-BOSCATO & DALLA FONTANA s.p.a., I-36100 Vicenza (IT)
(72) Inventor: SASSO, Daniele, I-36100 Vicenza (IT)
(74) Representative: Gustorf, Gerhard, Dipl.-Ing.
(86) International application number: IT9600170
(87) International publication number: WO9809921

(56) References cited:
- WO-A-82/02876
- DE-A- 3 210 158
- IT-B- 1 247 203
- IT-B- 1 247 204

## Description

The present invention relates to a glassware forming machine of the individual section type as set forth in the preambles of the independent claims 1 and 6.

The glassware manufacturers are interested at least since some dozens of years in the improvement of the above mentioned machines for several reasons, the first of which is regarding the subtantial increase of their productivity level.

Indeed, the glassware forming industry has achieved for each individual section a productivity level of about 20 cycles per minute (which was not conceivable even a few years ago), whereas the production rejects are due for over 40% to the parison transfer devices (invert process) and to the finished product drawing device (take-out process).

It is to be pointed out that the machine, which is described in the present patent specification, relates to the invert process, but it is just substantially transferable to the take-out process, as it will be explained later on.

It is quite apparent that the massive production, which can be obtained with said production cycles, allowed the manufacturers, who adopted them in their plants, to beat their competitors on the cost level, more than on production quality, which can be defined substantially acceptable at least for the main hollow glasware manufacturers.

Besides the care to increase the productivity, another care can't be forgotten: to decrease the production rejects, which obviously affect in the negative the cost decrease, which is due to the productivity increase.

The difficulty to proceed towards the direction of the productivity increase is obviously affected by the gob feed cycles into the blank moulds, by the finished product conveyor belt speed, etc., whereby it is not always possible to proceed in such a direction. But, after all, these are not the critical points of a glassware production plant, when the speed is critical, which is due to the productivity increase. Indeed the problem of the masses, which are moved during the invert process (the parison transferred from the blank mould to the blow mould) and during the take-out process (the finished products transferred from the blow mould to the cooling plate and then to the conveyor belt). The invert process is actuated by means of mould support arms, which are called "collar support arms" and which contain the parison mouths. Said arms are pivoted through 180°, so that the parisons can be transferred from the blank to the blow mould. From there the finished products are put on a cooling plate. An increase of productivity corresponds to an increase of the number of cycles per minute, i.e. to substantially decrease the time required by the support arms for actuating a cycle for the described transfer and return to the rest position.. The parison is made of material, which is plastic due to the high temperature, whereby the "collar support arms" are acting on the parison mouths with a tearing process. The consequences of such a process are sensed immediately or just after the finished product cooling process and they cause a series of rejects, which are due to cracks or breakings for residual stress.

Therefore it is possible to explain all the efforts for decreasing the rejects (production cycles per minute being equal) by trying to act on tearing intensity thanks to which the parison mouth is subjected whenever the parison is going to be transferred from the blank to the blow mould and whenever the finished product is put on the cooling plate.

Therefore it is necessary to conceive a rotation movement law of the "collar support arm", which should be at the beginning substantially softer with respect to the traditional solutions, said solutions being based on the pneumatic movement of a piston and on a hydraulic shock absorber. In such a way a parison transfer is obtained not only softer but also nearly vibrationless.

It was already explained that the transfer ("invert") process and the drawing ("take-out") process are obtained thanks to an arm rotation, which is pivoted by a toothed wheel. The latter one is engaged by a rack, which is in charge of the movement law of invert and take-out process.

Just up to the late seventies a solution was conceived, which provided the reciprocating rack movement by means of a direct current motor and of a belt drive. Indeed such a solution was never carried out and it represents just memories of the past.

Owens III. Inc. - USA - described in the patent DE-C₂-32 10 158 granted 1985 a device, which provided a connecting rod-crank transmission. This solution shouldn't be absolutely reliable due both to the high operation speed of the present plants and to the overall dimensions of such a solution.

A further solution, proposed in EP-A-059570, filed 1982 by Emhart Industries Inc. - USA, provided for the reciprocating rack movement a device made of a worm-helical teeth wheel, which required really eccessive dimensions for the plant. It is recognized that such a plant comprises: cooling air pipes, mould lubrication devices, several cables, etc., everything in a quite high temperature ambient. The insufficient mechanical reliability shouldn't be forgotten too, because of the high wear, which is due to the sliding friction between worm and helical teeth wheel.

WO-A-/82/02876 describes a structure of an individual section, where the movement is obtained with a substantially long shaft, which is settled within a bed plate, whereas a conical couple moves the invert device. The feasibleness appears to be quite difficult mainly because the neck ring axial dimension should be substantially reduced and therefore the opening of the arms couldn't be carried out.

As already stated, the traditional solution, which is at present still carried out at the standard level, is made of a pneumatic piston, which operates the rack. The rack is engaged by a toothed wheel, which pivotes through 180° the "collar support arms", whereas a shock absorber tries to get the final movement part of the various devices quite soifter.

In IT-A 1 247 203, an invert device is described, which is electrically operated, where the rotation of the "collar support arms" is made by an electric motor and by a device, which comprises a ball circulating screw shaft-rack or a worm-helical teeth wheel. Laboratory tests proved that this was not a rational way for solving the problem, due both to the high worm-helical teeth wheel wear and to the slack connected to the movement reversal.

The machines, which were described up to now and the machines, which belong to the state of the art, were not able to solve the problems of a plant, having a high productivity and a low reject rate, such a result being able to be obtained thanks to a particular movement law of the "collar support arms". Such a movement should substantially ensure that the movement of invert and take-out devices is provided by a quite softer movement law with respect to the described solutions, particularly to the solutions based on a pneumatic movement and a hydraulic shock absorber. In such a way the parison transfer process from the blank to the blow mould and the finished product transfer from the blow mould to the cooling plate is obtained according to a softer and vibrationless movement, thanks to an electronic cam and a continuous, harmonic acceleration-deceleration profile.

The previously cited IT-B 1 247 203 is pointing out the possible use of a servo-motor of brushless type, in order to eliminate the problems connected to the machines with an invert transfer process.. Indeed, even since 1991 the advantages were sensed in consequence of the introduction of an electric motor instead of the pneumatic piston for operating an invert device. Particularly the advantages were sensed, which were connected to the introduction of a permanent magnet brushless motor, which presents with respect to the other motors the property to supply a high couple at low r.p.m., whereas it allows to control the rotation speed just acting on stator circuit voltage and frequency.

In addition it was recognized that the know-how at the level of permanent magnet brushless motor manufacturers was not sufficient for solving the problems of the hollow glass industries, particularly the problems depending on the fact that the invert and take-out devices, which were comprising a ball circulating screw shaft and a lead nut, were replacing devices, which were based on the solution, for instance, of pneumatic pistons. Therefore problems of dimensions were arising, due to the fact that the brushless motor had to be connected with the ball circulating screw shaft and with the lead nut. It was necessary to save the traditional dimensions of the plant.

Furthermore the experience in the field of the machine tools teached something, but not everything, as the run, which is provided for the machine tools, are quite longer than the run (about equal to 200 mm.) of invert and take-out devices. In addition the run axis of the machine tools is substantially horizontal, whereas the same axis in the hollow glass industries is substantially vertical according to the traditional solution of the hollow glass manufacturing plants, whereby a particular problem arises, which should be adequately solved: the lubrication of the ball circulating screw shaft and of the lead nut.

A further difficulty to overcome is given by the particular ambient, where the invert and take-out devices are operating: substantially high temperature, cooling air which flows within the individual section and which drags polluting substances in: silica, dust , etc., whereas another problem, which is connected with the previous one, is regarding the fact that, if the screw shaft should be lubricated, it is to be in an oil bath, whereby the oil should be protected against such polluting substances, otherwise it should be necessary to proceed with frequent checks of lubricant, and consequently to block the production and therefore to reduce the productivity level.

Therefore the problem, which the machine according to the invention intends to solve, is to ensure a continuous operation of the brushless motor, in spite of the fact that each individual section is obliged to operate with substantially high temperature and that the external ambient, where each individual section is operating, is polluted by substances like: siliceous materials, dust, etc., which the cooling air is dragging in, and which could pollute the internal ambient of the motor.

These problems are solved by the machine according to the invention, having the features of the independent claims 1 and 6.

These and other features will be apparent from the following description and from the attached drawings, where:
Fig. 1 represents a longitudinal section of an already known glassware forming machine;
Fig.2 represents section of an invert device in a machine according to the invention just before the invert process is actuated;
Fig.3 represents the machine of Fig.2 just after the invert process is actuated;
Fig.4 represents a section of Fig.3, taken according the lines A'-A';
Fig. 5 represents a section of a take-out device in a glassware forming machine.

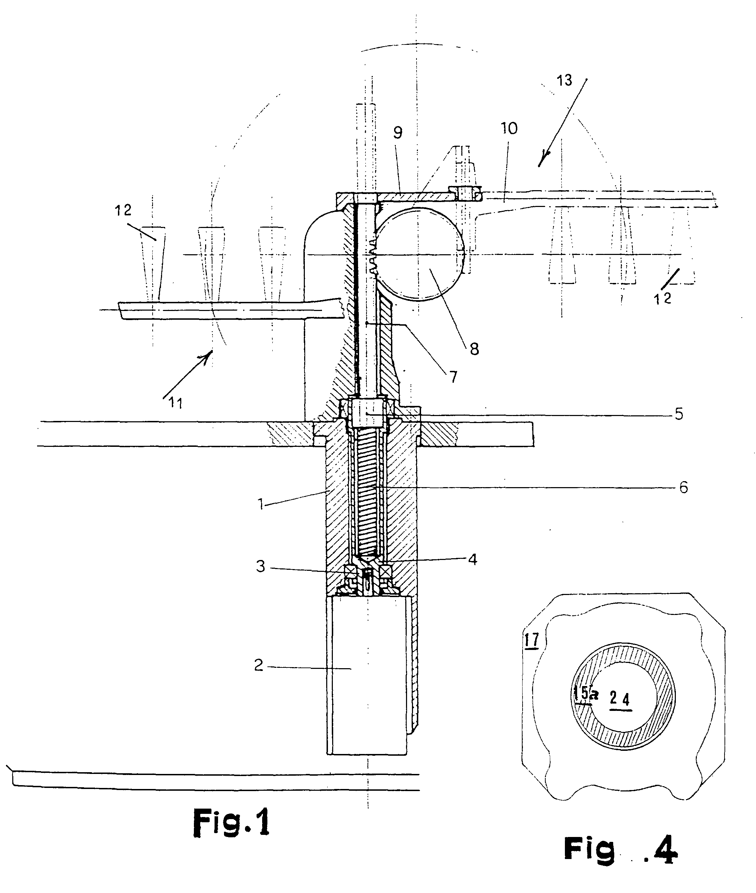

An already known glassware forming machine shows (Fig.1) an invert device, where 1 indicates an overall support, which is fixed on an upper plate of the individual section of a hollow glassware forming machine. The support 1 accomodates an electric motor 2, which can be of the brushless type and which is connected to a lead nut housing 4 by means of a joint 3. The housing 4 is rotated by the motor and actuates a lead nut 5, which axially moves a ball circulating screw 6. A rack 7 is connected to the screw 6. The teeth of the rack 7 are engaged by a toothed wheel 8, which rotates, in a way known per se, a parison collar support 10, which starts from an initial position 11, where one or more parisons 12 are engaged by the collar support 10 and are rotated together with the collar support up to a final position 13, where they are taken by one or more blow moulds, which are not represented in the drawings. Therefore the motor 2 causes the upwards movement of the rack 7 and the 180° rotation of the wheel 8, whereby the collar support 10 is moved from the position 11 to the position 13.

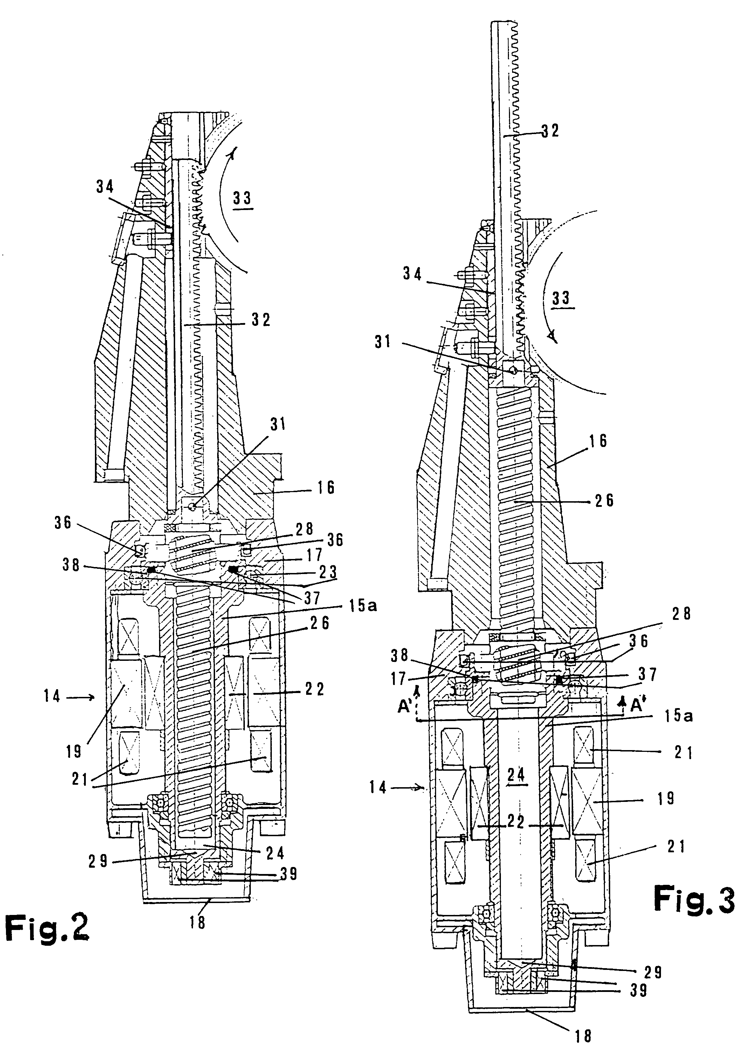

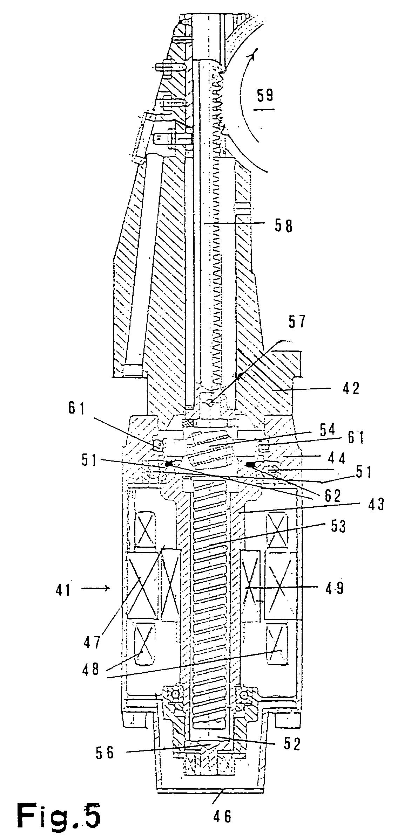

In the machine according to the invention (Figs.2,3) a brushless motor 14 is fixed to a support 16, which allows its connection to an individual section module, which is not represented in the drawings and which comprises, as already stated, a blank mould, a blow mould and a transfer device for the parison from the blank to the blow mould. The drawings show just the device, which operates said transfer process. It is to be added that the invert device is substantially the same as the take-out device, which transfers the finished product from the blow mould to a cooling plate. The motor 14 is provided with a rotor 15a. The motor comprises an armature 17, which is hermetically sealed in a way known per se at its bottom by a cap 18. The motor stator comprises a main winding 19 and a secondary winding 21, whereas a plurality of permanent magnets 22 are fixed on the rotor 15a, which is able to rotate with respect to the stator thanks to ball bearings 23. The rotor 15a of the motor 14 is made of a hollow shaft (see also Fig.4), which extends along substantially all the axial length of the motor. Such axial extension is substantially vertical in the same way as the traditional scheme of a hollow glassware forming machine. The hollow shaft 15a determines the presence of an internal space 24 of the motor. The hollow shaft 15a contains inside of itself and of the internal space 24, a ball circulating screw shaft 26, on which balls are circulating along the helical path of the shaft, said balls belonging to a lead nut 28, which is fixed to the rotor and rotates with it and which causes the axial displacement of the shaft 26 along a substantially vertical direction, as it will be explained later on. The space 24 is substantially filled with lubricating oil for satisfying the requirement of the rotation and of the running of the shaft 26, as well as the circulation of the balls along the helical path of the screw shaft 26. The lower part of the internal space 24 is plugged by a blind bottom 29, which ensures that the internal ambient 24 is plugged for a substantial seal of the oil lubricant.

Depending on the sense of rotation of the rotor 15a and consequently of the lead nut 28, the shaft 26 is running upwards or downwards. The shaft 26 is fixed by means of a pin 31 to a rack 32, which represents actuating means for the invert process. The same actuating means, which comprise a brushless motor, a lead nut, a hollow shaft and a screw shaft, are provided for a take-our process, thanks to which the finished products are put from the blow mould to a cooling plate, all these components not being represented in the drawings.

The rack 32 engages the teeth of a toothed wheel 33, which can pivot every time 180° clockwise (Fig.2) or anticlockwise (Fig.3) respectively for transferring the parison 12 (Fig.1) from a blank mould to a blow mould or for reaching the rest position. It is to be pointed out that the section of the rack 32, not represented in the drawings, is square, because it runs in the seat, which has a square section too, represented by a bronze sliding gib 34 (Figs.2,3). In such a way the rack is able to run just axially, avoiding a rotation similar to the rotation of the lead nut 28.

In the cited IT-A 1 247 203 the introduction of a brushless motor was proposed, so that electronic cams could be made with sinusoidal interpolations for ensuring a better movement continuity.

Indeed some years were necessary for well defining the specifications of such a motor to be utilized in the glassware forming industry. The brushless motors were already used, for instance, in the field of machine tools. But these brushless motors were used for controlling a horizontal running of the tools, whereas the glassware industries are traditionally controlling a vertical running of the actuators. A modification appeared quite necessary: to provide a hollow shaft in the rotor of the motor, so that the dimensions required by the screw shaft 26 and the rack 32 are practically the same as in the traditional plants, as the screw shaft can occupy the recess of the rotor.

But a further problem was arising: the particular ambient where the glassware forming machine is operating. Indeed the invert device, as well as the take-out device are operating in substantially high temperature ambients, whereas the air which circulates within each individual section is dragging polluting substances: siliceous materials, dust, etc. whereby it is necessary that the internal ambient of the motor, as well as the lubricating oil, which is put inside, are protected against the danger of pollution. This latter represents the actual reason why the hollow shaft 15a is substantially airtight, not only at its bottom, thanks to the blind bottom 29 and the plug 18, but also on its top, thanks to upper seals 36 and an O-ring 37, both placed for protecting the tightness of the top of the armature 17 of the motor 14. The O-ring 37 is placed in direct contact with a bush 38, which is integral with the motor 14. In such a way the cooling air, which drags the polluting substances, could enter the square seat where the rack is sliding, but it is stopped by the seals 36 and, for the part, which overcomes this barrage, by the O-ring 37. Therefore not only the lubrication in oil bath of the screw shaft with the balls running on its spiral is ensured, but also the protection of the internal ambient where the oil is working is ensured, too. Neither filling control, nor frequent substitution of the lubricant are practically required, unless at reasonable time intervals.

As for the lower part of the hollow shaft 24 its protection is ensured by the cap 18 and by the blind bottom 29, which are defined lower airtight means, whereas the upper seals 36 and the O-ring 37 represent the upper airtight means. The cap 18 can be removed, for instace can be unscrewed making it possible to assemble or to check for a service a device 39, which is called resolver. It is mounted on the rotor 15a of the motor 14 and it represents a position transducer for checking the exact angular position of the rotor and its exact speed.

In a glassware forming machine, which is provided with a take-out device for transferring a finished product from a blow mould to a cooling plate, Fig.5 represents the components, which are here present. In particular a brushless motor 41 is fixed to a support 42, which allows its connection to an individual section module, which is not represented in the drawings and which comprises a blow mould and a transfer device of a finished product from the blow mould to a cooling plate, everything also not represented in the drawings. Fig.5 represents just the device, which operates the transfer of the finished product to the cooling plate. The motor is provided with a rotor 43 and comprises also an armature 44, which is hermetically sealed in a way known per se at its bottom by a cap 46. The motor stator 44 comprises a main winding 47 and a secondary winding 48, whereas a plurality of permanent magnets 49 are fixed on the rotor 43, which is able to rotate with respect to the stator thanks to the ball bearings 51. The rotor 43 is made of a hollow shaft, which determines an internal space 52 of the motor, and which internally contains a ball circulating screw shaft 53, on which balls are circulating along the helical paths of the shaft, the balls belonging to a lead nut 54, which is fixed to the rotor and which rotates with it. The lead nut 54 causes the axial displacement of the shaft 53 along a substantially vertical direction. The space 52 is substantially filled with lubricating oil for satisfying the requirement of the rotation and of the running of the shaft 53, as well as the circulation of the balls along the helical path of the shaft 53. The bottom of the internal 52 is plugged by a blind bottom 56, which ensures that the internal 52 is plugged for a substantial seal of the lubricant oil. In the same manner as the shaft 26 of the invert device, the shaft 53 is running upwards and downwards, depending on the sense of rotation of the shaft 53. This shaft is connected by means of a pin 57 to a rack 58, which represents the actuator of the take-out process. The rack 58 engages the teeth of a toothed wheel 59 which can rotate every time 180° clockwise or counterclockwise, in the same manner as the wheel 33 of the invert device.

The hollow shaft 43 is substantially airtight also at its top, thanks to upper seals 61 and an O-ring 62, both placed for protecting the tightness of the top of the armature 44.

Thanks to the specifications of the brushless motor and its reliability, the operations of the invert and take-out processes are obtained in a soft, progressive and vibrationless way, so that the rejects of the finished products are substantially reduced with respect to the traditional solutions.

## Claims

1. A glassware forming machine of the individual section type, every section comprising a blank mould and a blow mould, a servo-invert device for moving at least one parison (12) from the blank mould to the blow mould whereby the parison is inverted, said servo-invert device comprising a support arm (10) for the parison, a toothed wheel (33), a rack (32) engaging the toothed wheel and a rack reciprocating device which comprises an electric motor (14), for instance a brushless motor, providing the reciprocating movement of the rack (32) by means of a ball circulating screw shaft (26) and a lead nut (28), **characterized in that** the internal space (24) of the motor (14), housing said screw shaft (26), contains a lubricating oil bath and is provided with lower airtight means (18, 29) and with upper airtight means (36, 37) in such a way that the lower airtight means ensure that the ball circulating screw shaft (26) is continuously in said lubricating oil bath, whereas the upper airtight means ensure that the screw shaft (26) and the lead nut (28) as well as the lubricating oil are protected from polluting substances, said substances being dragged by cooling air circulating in the external ambient, where each individual section is operating.

2. Machine according to claim 1, **characterized in that** an armature (17) of the motor (14) is sealed by a cap (18), which ensures a substantial tightness of its bottom with respect to the external ambient, whereas a blind bottom (29) ensures that the internal space (24) is plugged for substantially sealing of the lubricating oil bath.

3. Machine according to claim 2, **characterized by** upper seals (36) and an O-ring (37), both adapted to ensure a substantial tightness of the top of the armature (17).

4. Machine according to any of the preceding claims, **characterized in that** the internal space (24) is substantially filled with lubricating oil for satisfying the requirement of rotation and running of the shaft (26) and of the circulation of the balls along the helical path of the shaft (26).

5. Machine according to any of the preceding claims, **characterized in that** the lower and the upper airtight means (18, 29; 36, 37) are adapted to ensure a substantial protection of the internal space (24) against the danger of pollution by the cooling air which is externally operating in the individual section, avoiding filling control and frequent substitiution of the lubricating oil, unless at reasonable time intervals.

6. A glassware forming machine of the individual section type, every section comprising a blank mould and a blow mould, a take-out device for moving at least one finished product form the blow mould to a cooling plate, said take-out device comprising a support arm (42) for the finished product, a toothed wheel (59), a rack (58) engaging the toothed wheel and a rack reciprocating device which comprises an electric motor (41), particularly a brushless motor, providing the reciprocating movement of the rack by means of a ball circulating screw shaft (53) and a lead nut (54), **characterized in that** the internal space (52) of the motor (41), housing said screw shaft (53), contains a lubricating oil bath and is provided with lower airthigth means (46, 56) and with upper airtight means (61, 62) in such a way that the lower airtight means ensure that the ball circulating screw shaft (53) is continuously in said lubricating oil bath, whereas the upper airtight means ensure that the screw shaft (53) and the lead nut (54) as well as the lubricating oil are protected from polluting substances, said substances being dragged by cooling air circulating in the external ambient, where each individual section is operating.

## Patentansprüche

1. Glasformmaschine der IS-Bauart, bei der jede Sektion eine Vorform und eine Fertigform hat und ein Servo-Wendeorgan zur Überführung wenigstens eines Külbels (12) von der Vorform zur Fertigform vorgesehen ist, wobei das Külbel umgedreht wird, welches Wendeorgan einen Trägerarm (10) für das Külbel, ein. Zahnrad (33), eine mit diesem kämmende Zahnstange (32) sowie einen hin- und hergehenden Antrieb für die Zahnstange hat, der einen Elektromotor (14), beispielsweise einen bürstenlosen Motor, zur Erzeugung der hin- und hergehenden Bewegung der Zahnstange (32) über eine Kugelumlaufspindel (26) mit Leitmutter (28) aufweist, **dadurch gekennzeichnet, daß** der Innenraum (24) des die Gewindespindel (26) aufnehmenden Motors (14) ein Schmierölbad aufweist und mit unteren luftdicht abschließenden Mitteln (18, 29) sowie mit oberen luftdicht abschließenden Mitteln (36, 37) in der Weise versehen ist, daß die unteren luftdicht abschließenden Mittel gewährleisten, daß sich die Kugelumlaufspindel (26) ständig in dem Schmierölbad befindet, während die oberen luftdicht abschließenden Mittel sicherstellen, daß die Gewindespindel (26) mit ihrer Leitmutter (28) und das Schmieröl vor verunreinigenden Substanzen geschützt sind, welche von der Kühlluftzirkulation im Außenraum mitgerissen werden, in dem jede Individual-Sektion arbeitet.

2. Maschine nach Anspruch 1, **dadurch gekennzeichnet, daß** das Ankergehäuse (17) des Motors (14) durch einen Deckel (18) abgeschlossen ist, der den Boden des Gehäuses zum Außenraum im wesentlichen abdichtet, während ein Blindboden (29) gewährleistet, daß der Innenraum (24) verschlossen ist, um das Schmierölbad im wesentlichen abzudichten.

3. Maschine nach Anspruch 2, **gekennzeichnet durch** obere Dichtungen (36) und einen O-Ring (37), die beide für eine Abdichtung des oberen Endes des Ankergehäuses (17) sorgen.

4. Maschine nach einem der vorhergehenden Ansprüche, **dadurch gekennzeichnet, daß** der Innenraum (24) im wesentlichen mit Schmieröl gefüllt ist, welches eine Drehung und Verschiebung der Spindel (26) und einen Kugelumlauf auf der schraubenförmigen Bahn der Spindel (26) gewährleistet.

5. Maschine nach einem der vorhergehenden Ansprüche, **dadurch gekennzeichnet, daß** die unteren und oberen luftdicht abschließenden Mittel (18, 19; 36, 37) einen Schutz des Innenraumes (24) gegen die Gefahr von Verschmutzungen durch Kühlluft gewährleisten, die in der Individual-Sektion außen strömt, wodurch Füllstandskontrollen und ein häufiger Austausch von Schmieröl vermieden werden, ausgenommen nach jeweils vernünftigen Zeitspannen.

6. Glasformmaschine der IS-Bauart, bei der jede Sektion eine Vorform und eine Fertigform hat und eine Abnahmevorrichtung zur Überführung wenigstens eines Endproduktes von der Fertigform zu einer Kühlplatte vorgesehen ist, wobei die Abnahmevorrichtung einen Trägerarm (42) für das Endprodukt, ein Zahnrad (59), eine mit diesem kämmende Zahnstange (58) sowie einen hin- und hergehenden Antrieb für die Zahnstange hat, der einen Elektromotor (41), insbesondere einen bürstenlosen Motor, zur Erzeugung der hin- und hergehenden Bewegung der Zahnstange (58) über eine Kugelumlaufspindel (53) mit Leitmutter (54) aufweist, **dadurch gekennzeichnet, daß** der Innenraum (52) des die Gewindespindel (53) aufnehmenden Motors (41) ein Schmierölbad aufweist und mit unteren luftdicht abschließenden Mitteln (46, 56) sowie mit oberen luftdicht abschließenden Mitteln (61, 62) in der Weise versehen ist, daß die unteren luftdicht abschließenden Mittel gewährleisten, daß sich die Kugelumlaufspindel (53) ständig in dem Schmierölbad befindet, während die oberen luftdicht abschließenden Mittel sicherstellen, daß die Gewindespindel (53) mit ihrer Leitmutter (54) und das Schmieröl vor verunreinigenden Substanzen geschützt sind, welche von der Kühlluftzirkulation im Außenraum mitgerissen werden, in dem jede Individual-Sektion arbeitet.

## Revendications

1. Machine de façonnage d'articles en verre du type à section individuelle, chaque section comprenant un moule d'ébauche et un moule de soufflage, un dispositif de renversement automatique pour déplacer au moins une paraison (12) depuis le moule d'ébauche jusqu'au moule de soufflage en renversant la paraison, ledit dispositif de renversement automatique comprenant un bras support (10) pour la paraison, une roue dentée (33), une crémaillère (32) en prise sur la roue dentée et un dispositif d'entraînement de crémaillère en va et vient qui comprend un moteur électrique (14), par exemple un moteur sans balais, produisant le mouvement de va et vient de la crémaillère (32) au moyen d'un arbre à vis à billes circulantes (26) et d'un écrou d'entraînement (28), **caractérisée en ce que** l'espace interne (24) du moteur (14), contenant ledit arbre à vis (26), contient un bain d'huile de lubrification et est muni de moyens d'étanchéité inférieurs à l'air (18, 29) et de moyens d'étanchéité supérieurs à l'air (36, 37) de telle façon que les moyens d'étanchéité inférieurs à l'air fassent en sorte que l'arbre à vis à billes circulantes (26) est continuellement dans ledit bain d'huile de lubrification, tandis que les moyens d'étanchéité supérieurs à l'air fassent en sorte que l'arbre à vis (26) et l'écrou d'entraînement (28) aussi bien que l'huile de lubrification soient protégés des substances polluantes, lesdites substances étant entraînées par l'air de refroidissement circulant dans l'ambiance externe, pendant que chaque section individuelle fonctionne.

2. Machine selon la revendication 1, **caractérisée en ce qu'**une armature (17) du moteur (14) est fixée par un bouchon (18), qui assure une étanchéité substantielle de son fond par rapport à l'ambiance externe, tandis qu'un fond borgne (29) fait en sorte que l'espace interne (24) est bouché pour fermer de façon substantiellement étanche le bain d'huile de lubrification.

3. Machine selon la revendication 2, **caractérisée par** des joints supérieurs (36) et un joint torique (37), adaptés ensemble pour assurer une étanchéité substantielle du sommet de l'armature (17).

4. Machine selon l'une quelconque des revendications précédentes, **caractérisée en ce que** l'espace interne (24) est sensiblement rempli avec de l'huile de lubrification pour satisfaire les besoins de rotation et de coulissement de l'arbre (26) et de circulation des billes le long du chemin hélicoïdal de l'arbre (26).

5. Machine selon l'une quelconque des revendications précédentes, **caractérisée en ce que** les moyens d'étanchéité inférieurs et supérieurs (18, 29 ; 36, 37) sont adaptés pour assurer une protection substantielle de l'espace interne (24) contre le danger de pollution par l'air de refroidissement qui circule à l'extérieur dans la section individuelle, évitant les contrôles de remplissage et la substitution fréquente d'huile de lubrification, sauf à des intervalles de temps raisonnables.

6. Machine de façonnage d'articles en verre du type à section individuelle, chaque section comprenant un moule d'ébauche et un moule de soufflage, un dispositif d'extraction pour déplacer au moins un produit fini à partir du moule de soufflage jusqu'à une plaque de refroidissement, ledit dispositif d'extraction comprenant un bras support (42) pour le produit fini, une roue dentée (59), une crémaillère (58) en prise sur la roue dentée et un dispositif d'entraînement de crémaillère en va et vient qui comprend un moteur électrique (41), en particulier un moteur sans balais, produisant le mouvement de va et vient de la crémaillère au moyen d'un arbre à vis à billes circulantes (53) et d'un écrou d'entraînement (54), **caractérisée en ce que** l'espace interne (52) du moteur (41), contenant ledit arbre à vis (53), contient un bain d'huile de lubrification et est muni de moyens d'étanchéité inférieurs (46, 56) et de moyens d'étanchéité supérieurs (61, 62) de telle façon que les moyens d'étanchéité inférieurs fassent en sorte que l'arbre à vis à billes circulantes (53) est continuellement dans ledit bain d'huile de lubrification, tandis que les moyens d'étanchéité supérieurs font en sorte que l'arbre à vis (53) et l'écrou d'entraînement (54) aussi bien que l'huile de lubrification sont protégés des substances polluantes, lesdites substances étant entraînées par l'air de refroidissement circulant dans l'ambiance externe, pendant que chaque section individuelle fonctionne.
